# DEMANDE DE BREVET EUROPEEN

(11) **EP 4 458 740 A1**
(43) Date de publication de la demande: **06.11.2024**
(21) Numéro de dépôt: 23171303.3
(22) Date de dépôt: 03.05.2023
(51) Int. Cl.: B65G 47/51, B65B 35/04, B65G 47/64, B65G 47/90

(54) **DISPOSITIF ET PROCÉDÉ DE POSITIONNEMENT DE PRODUITS DANS UNE LIGNE D'EMBALLAGE**

(71) Demandeur: Demaurex S.A, 1024 Ecublens (CH); Rotzinger AG, 4303 Kaiseraugst (CH)
(72) Inventeur: Vouillamoz, Christian, 1024 Ecublens (CH); Philipp, Kurt, 79639 Grenzach-Wyhlen (DE)
(74) Mandataire: Braunpat AG

(57) **Abrégé**

La présente invention se rapporte à un dispositif pour le positionnement de produits (P) dans une ligne de production, en particulier pour le positionnement de produits depuis une bande de convoyage dans un contenant, comme par exemple une boîte, comprenant un buffer (2) comprenant au moins deux bandes de convoyage (2a,2b) pour le transport des produits (P) et deux aiguillages (4) permettant de transférer des deux côtés des bandes de convoyage (2a,2b) les produits (P) d'une des bandes de convoyage (2a, 2b) à l'autre bande de convoyage (2a,2b), au moins un robot (3) configuré pour saisir au moins un produit (P) de la première bande de convoyage (2a) et pour le placer sur une bande de transport (5) ou dans un contenant placé sur la bande de transport (5),ladite bande de transport (5) étant placée essentiellement parallèlement et à proximité de la première bande de convoyage (2a) de telle façon que le robot (3) puisse positionner un produit de la première bande de convoyage (2a) sur la bande de transport (5), caractérisé en ce que la première bande de convoyage (2a) et la bande de transport (5) sont configurées pour se déplacer en sens opposés. La présente invention se rapporte également à l'utilisation d'un tel dispositif et à deux procédés d'emballages par l'intermédiaire du dispositif de l'invention.

## Description

### Domaine technique de l'invention

La présente invention concerne le domaine des dispositifs, ou machines, pour l'alimentation d'une ligne de production en produits. En particulier, cette demande concerne un dispositif qui permet d'efficacement transférer des produits d'une ligne de production à une ligne d'emballage. La présente demande concerne aussi une utilisation inventive d'un dispositif selon la présente invention et deux procédés pour l'emballage de produits par l'intermédiaire d'un dispositif selon la présente invention.

### État de la technique

Lors de la fabrication de produits au moyen de lignes de production, il est courant d'utiliser des buffers, aussi appelés tampons, pour découpler les processus et augmenter l'efficacité. Dans les lignes de production, les articles produits en rangées sont chargés par une installation de production, comme un four ou une installation de coulée, sur une large bande principale qui permet d'acheminer les produits vers une installation d'emballage sur la plus courte distance possible afin d'augmenter l'efficacité et pour maintenir les normes d'hygiène lorsque les produits sont des produits alimentaires. Ces produits peuvent par exemple être des biscuits, de tablettes de chocolat ou de barres de chocolat.

Selon la capacité de production, plusieurs lignes d'emballage sont nécessaires pour emballer une quantité produite avec un taux de rebut aussi faible que possible. Une ligne d'emballage se compose de plusieurs machines d'emballage connectées en série, comme par exemple une ensacheuse en première position, une multi-emballeuse en deuxième position, une encartonneuse en troisième position et enfin un palettiseur. Si l'une des machines de cette ligne s'arrête en raison d'une panne, c'est toute la ligne qui s'arrête. Pour éviter tout débordement à production constante, il faut soit qu'une ligne d'emballage supplémentaire, dite de veille, prenne le relais, soit qu'un buffer reçoive les produits en trop, ce qui permet d'éviter un débordement de produits.

L'état de la technique connaît des buffers à bandes qui se trouvent à la fin d'une ligne d'alimentation et qui peuvent ainsi absorber le trop-plein de rangées de produits qui ne peuvent pas être attribuées aux machines d'emballage en amont. Un débordement de rangées de produits peut se produire lorsque les lignes d'emballage à alimenter par la ligne d'alimentation sont arrêtées et que les rangées de produits alimentées ne peuvent donc pas être attribuées. Pour le transfert des produits depuis la ligne d'alimentation vers la ligne d'emballage, il est par exemple connu d'utiliser des robots positionnés en série le long du flux de produits qui permettent de saisir les produits se trouvant sur une bande de la ligne d'alimentation et de placer ces produits dans un espace libre de contenants, tels que des boîtes, transportés par une bande de la ligne d'emballage.

Un problème des lignes de production connues qui comprennent un buffer est que les lignes deviennent alors très longues et les coûts associés à ces lignes sont donc importants. En effet, elles prévoient en amont du dispositif comprenant les robots de transferts un ou plusieurs buffers et il est alors nécessaire, afin d'éviter d'avoir une ligne de productions rectiligne longue de plusieurs dizaines de mètres, de prévoir des bandes courbées afin de créer une ligne de productions en serpentin. De telles bandes courbées engendrent en elles-mêmes des défis car les produits ne sont pas transportés à la même vitesse selon leur position par rapport au centre de rotation. De plus, il est nécessaire de prévoir en aval des bandes courbées qui reforment les rangées de produits. Ceci rallonge la ligne de production et augmente à nouveau les coûts. Un des buts de la présente invention est donc de proposer un dispositif qui permet de réduire la longueur des lignes de production et donc d'augmenter leur efficacité et de diminuer leur coût.

Un problème supplémentaire des dispositifs connus réside dans le fait que le dernier robot dans le sens du flux de produits n'a à disposition qu'un nombre restreint de produits car un grand nombre de produis ont déjà été transférés par les robots en amont. Si en même temps la bande de la ligne d'emballage est configurée pour transporter les contenants, dans le sens du flux de produits, les derniers robots dans le sens du flux, ne voient que des boites déjà pleines. Ceci est inefficace et résulte en un nombre de produits qui ne peuvent pas être placés dans les contenants. Afin de remercier à ce problème, il a été proposé de travailler en « contre-flux ». Ceci implique que la bande de la ligne de production de laquelle les robots transfèrent les produits et la bande d'emballage qui transportent les contenants se déplacent en sens opposés. Ainsi, les robots en fin de ligne voient un nombre restreint de produits mais des boîtes vides et les robots en amont voient beaucoup de produits et des boîtes préremplies. Toutefois, les lignes de productions connues qui utilisent le mode dit de « contre-flux », bien que plus efficaces que les lignes qui n'utilisent pas ce mode, sont très longues ; elles prennent beaucoup de place et donc sont très coûteuses.

Il existe par conséquent un besoin pour un dispositif permettant l'utilisation du mode contre-flux dans une ligne de production sans augmenter la longueur de cette dernière.

### Résumé de l'invention

Le but de la présente invention de proposer un dispositif qui permet de réduire la longueur des lignes de production et d'utiliser le mode contre-flux. Des autres buts de la présente invention sont de proposer une utilisation inventive d'un dispositif selon la présente et deux procédés d'emballage employant un dispositif selon la présente invention.

Selon l'invention, ces buts sont atteints grâce aux objets des revendications indépendantes. Les aspects plus spécifiques de la présente invention sont décrits dans les revendications dépendantes ainsi que dans la description.

De manière plus spécifique, un but de l'invention est atteint grâce à un dispositif pour le positionnement de produits dans une ligne de production, en particulier pour le positionnement de produits depuis une bande de convoyage dans un contenant, comme par exemple une boîte, transporté par une band de transport comprenant :
- un buffer comprenant au moins deux bandes de convoyage pour le transport des produits et deux aiguillages permettant de transférer des deux côtés des bandes de convoyage les produits d'une des bandes de convoyage à l'autre bande de convoyage,
- au moins un robot configuré pour saisir au moins un produit de la première bande de convoyage et pour le placer sur une bande de transport ou dans un contenant placé sur la bande de transport,
- ladite bande de transport étant placée essentiellement parallèlement et à proximité de la première bande de convoyage de telle façon que le robot puisse positionner un produit de la première bande de convoyage sur la bande de transport,
- où la première bande de convoyage et la bande de transport sont configurées pour se déplacer en sens opposés.

Un tel dispositif permet grâce à la combinaison proposée d'un buffer, des robots et de la bande de transport de réduire la longueur d'une ligne de production tout en ayant les avantages apportés par le buffer et les robots de placement. Comme la première bande de convoyage et la bande de transport sont configurées pour se déplacer en sens opposés, le dispositif permet de mettre en oeuvre le mode dit de contre-flux au niveau des robots ce qui augmente l'efficacité de la ligne de production. Il est de plus possible de rester en ligne avec le flux de production. Les produits sont fournis par un dispositif de production dans une direction et les produits à la sortie du dispositif selon la présente invention sortent dans la même direction. On évite ainsi des systèmes de convoyeurs en amont qui doivent amener le flux dans le sens opposé et on obtient globalement une ligne plus courte.

Dans un premier mode de réalisation préféré de la présente invention, le dispositif comprend au moins deux robots. Ceci permet d'augmenter le nombre de produits qui peuvent être traités par unité de temps. Avantageusement, le dispositif comprend des moyens de vision artificielle permettant aux robots de reconnaître la forme et la position des produits. Les moyens de vision artificielle sont avantageusement configurés pour permettre aux robots de placer les produits dans un espace libre du contenant ou dans un espace libre de la bande de transport.

Dans un autre mode de réalisation préféré de la présente invention, la première bande de convoyage et la bande de transport sont configurées de telle sorte que leurs vitesses peuvent être adaptées de manière individuelle. Ceci permet d'adapter la vitesse de ces bandes à la vitesse de la ligne de production dans son ensemble.

Dans un autre mode de réalisation préféré de la présente invention, le sens de déplacement de la première bande de convoyage, de la deuxième bande de convoyage et de la bande de transport peut être inversé. Ceci permet de pouvoir utiliser le dispositif dans des modes de fonctionnement différents et d'implémenter le dispositif dans différentes lignes de production.

Dans encore un autre mode de réalisation préféré de la présente invention, les aiguillages comprennent au moins une bande d'aiguillage avec deux rouleaux de bande, où la bande d'aiguillage est configurée pour que la hauteur d'au moins un des rouleaux de bande soit ajustable à la hauteur de la première bande de convoyage et à la hauteur de la deuxième bande de convoyage.

Dans un autre mode de réalisation préféré de la présente invention, la bande d'aiguillage est inclinable afin d'ajuster la hauteur du deuxième rouleau de bande à la hauteur de la première bande de convoyage et à la hauteur de la deuxième bande de convoyage.

Dans encore un autre mode de réalisation préféré de la présente invention, le dispositif comprend un mécanisme d'ascenseur configuré pour ajuster la hauteur des deux rouleaux de bande à la hauteur de la première bande de convoyage et à la hauteur de la deuxième bande de convoyage.

Dans un autre mode de réalisation préféré de la présente invention, le dispositif comprend au moins trois bandes de convoyage. Ceci permet d'augmenter la capacité de tamponnage du buffer et donc du dispositif dans son ensemble.

Dans encore un autre mode de réalisation préféré de la présente invention, le robot est un robot delta ou scara.

Un but de la présente invention est aussi atteint par l'utilisation d'un dispositif selon la présente invention pour le placement d'un produit depuis une bande d'une ligne de production vers un contenant, l'utilisation prévoyant que le produit placé sur la première bande de convoyage du buffer est saisi par le robot et placé dans un espace libre d'un contenant sur la bade de transport ou dans un espace libre de la bande de transport, la première bande de convoyage et la bande de transport se déplaçant en sens opposés. Une telle utilisation est favorable car le premier robot dans la direction de déplacement des produits sur la première bande de convoyage voit beaucoup de produits et peut placer ceux-ci dans les espaces libre restants de la bande de transport où les espaces libres restants des contenants transportés par cette dernière. Le deuxième robot dans la direction de transport des produits voit quant à lui une quantité restreinte de produits mais des boites vides. Ce mode d'utilisation du dispositif selon la présente invention permet donc d'augmenter l'efficacité de la ligne de production.

Un but de la présente invention est atteint par un premier procédé pour l'emballage de produits dans une ligne de production par l'intermédiaire d'un dispositif selon la présente invention comprenant les étapes suivantes :
a. Chargement de produits sur la première bande d'aiguillage ;
b. Transfert des produits sur la deuxième bande de convoyage du buffer;
c. Transport des produits par la deuxième bande de convoyage en direction de la deuxième bande d'aiguillage;
d. Transfert des produits de la deuxième bande de convoyage à la première bande de convoyage par l'intermédiaire de la deuxième bande d'aiguillage;
e. Transport des produits par la première bande de convoyage en direction de la première bande d'aiguillage;
f. Saisie d'un produit par un robot;
g. Placement par le robot du produit saisi dans un espace libre d'un contenant sur la bande de transport ou dans un espace libre de la bande de transport, où la bande de transport se déplace en sens opposés de la première bande de convoyage ;
h. Transport des produits placés sur la bande de transport par la bande de transport vers un dispositif d'emballage ;

Finalement, un but de la présente invention est aussi atteint par un deuxième procédé pour l'emballage de produits dans une ligne de production par l'intermédiaire d'un dispositif selon la présente invention comprenant les étapes suivantes :
a. Chargement de produits sur la première bande d'aiguillage ;
b. Transfert des produits sur la première bande de convoyage du buffer ;
c. Saisie d'un produits par un robot;
d. Placement par le robot du produit saisi dans un espace libre d'un contenant sur la bande de transport ou dans un espace libre de la bande de transport, où la bande de transport se déplace en sens opposé à celui de la première bande de convoyage ;
e. Transfert des produits non saisis par le robot de la première bande de convoyage à la deuxième bande de convoyage par l'intermédiaire de la deuxième bande d'aiguillage
f. Transport des produits placés sur la bande de transport par la bande de transport vers un dispositif d'emballage

Il faut noter que de nombreux procédés avantageux peuvent être mis en oeuvre à l'aide du dispositif selon la présente invention. En plus des deux procédés présentés ci-dessus, un procédé avantageux voudrait par exemple prévoir que les produits soient chargés par le premier aiguillage sur la deuxième bande de convoyage du buffer. Ces produits seraient transportés par la deuxième bande de convoyage vers le deuxième aiguillage. Grâce à ce dernier, les produits seraient alors transférés vers la troisième bande de convoyage pour être transportés par cette dernière vers le premier aiguillage. Avec le premier aiguillage, les produits seraient transférés de la troisième bande de convoyage sur la première bande de convoyage pour y être saisis par les robots et transférés par ceux-ci vers la bande de transport. Dans ce mode de réalisation, la première bande de convoyage se déplace en direction du flux de produit sortant de l'installation de production et la bande de transport dans le sens opposé. Ainsi, le mode contre-flux peut être utilisé au niveau des robots. De plus, grâce à ce mode de réalisation, le buffer peut utiliser toute sa capacité de stockage.

Une capacité de stockage maximum est aussi atteinte lorsque le procédé prévoit que le premier aiguillage charge les produits sur la deuxième et la troisième bande de convoyage. Ces produits peuvent être alors transférés par le deuxième aiguillage sur la première bande de convoyage qui se déplace en sens opposé par rapport au flux de produits provenant de l'installation de production. Finalement, les produis peuvent être saisis par les robots et transférés sur la bande de transport qui se déplace dans le sens du flux de produits.

### Brève description des dessins

Les particularités et les avantages de la présente invention apparaîtront avec plus de détails dans le cadre de la description qui suit avec un exemple de réalisation donné à titre illustratif et non limitatif en référence aux deux dessins ci-annexés qui représentent :
- La Figure 1 est une vue en perspective d'un dispositif selon un premier mode de réalisation de la présente invention;
- La Figure 2 est une vue en perspective d'un dispositif selon un deuxième mode de réalisation de la présente invention.

### Description détaillée

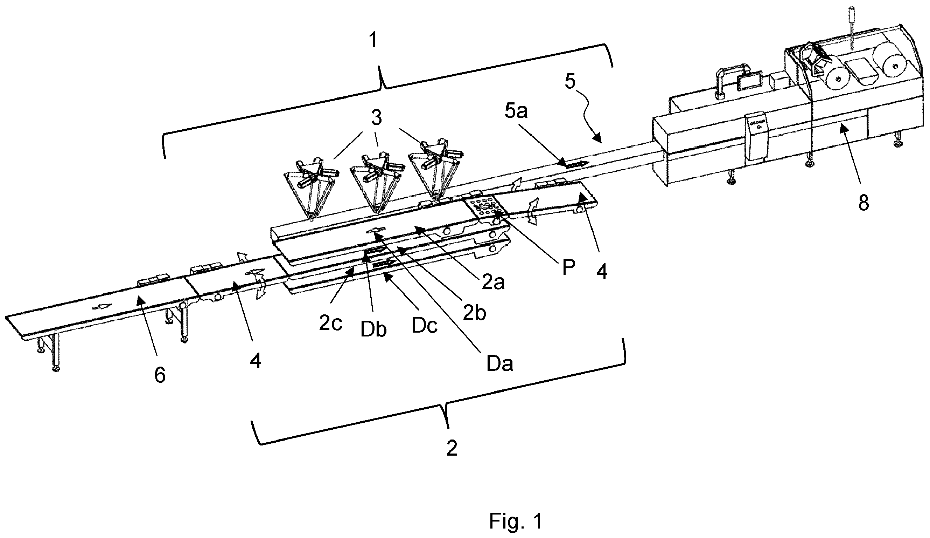

La Figure 1 présente une vue en perspective d'un dispositif 1 pour le positionnement de produits P dans une ligne de production selon un premier mode de réalisation. Le dispositif 1 comprend un buffer 2 avec, dans ce mode de réalisation, trois bandes de convoyage 2a,2b,2c dont leur direction de déplacement sont symbolisées par les flèches Da, Db et Dc. Ces directions peuvent être choisies indépendamment les unes des autres. Il est également possible d'ajuster la vitesse de déplacement de ces bandes individuellement. Le buffer 2 comprend également deux aiguillages 4, ici sous la forme de bandes inclinables, où chacun des aiguillages 4 est placé à une extrémité des bandes de convoyages 2a-2c. Grâce aux aiguillages 4, il est possible de charger les produits P provenant d'une installation de production (non montrée dans la Figure 1) par l'intermédiaire d'une bande 6 sur la deuxième bande de convoyage 2b ou la troisième bande de convoyage 2c. Par l'intermédiaire de l'aiguillage 4 le plus distant de la ligne de la bande 6, il est alors possible de recharger les produits stockés sur la deuxième et la troisième bande de convoyage du buffer 2 sur la première bande de convoyage 2a.

Lorsque les produits se trouvent sur la première bande de convoyage 2a, ils peuvent être saisis par l'intermédiaire des robots 3 et être placés dans un espace vide de la bande de transport 5 ou dans un espace vide d'un contenant, par exemple une boîte (non montrée ici), étant déplacé par la bande de transport 5. Les contenants remplis de produits P sont alors transportés par la bande de transport 5 dans la direction 5a vers un dispositif d'emballage 8.

Comme on peut le voir dans la Figure 1, la bande de transport 5 et la première bande de convoyage 2a se déplacent, dans ce mode de réalisation dans des directions opposées. Ceci permet d'utiliser le dispositif 1 dans le mode dit de contre-flux. Dans un tel mode, le premier robot dans la direction Da « voit » beaucoup de produits P qu'il peut alors placer dans les espaces libres restants des contenant qui se trouvent sur la bande de transport 5 et qui se déplacent dans la direction 5a. Les deuxième et troisième robots dans la direction Da voient quant à eux moins de produits P mais des contenants vides. Le mode contre-flux permet un remplissage des contenants efficace. De plus, dans ce mode de réalisation, il est possible de garder la direction de flux de production dans la ligne de production constante. Les produits entrent de gauche à droite dans la Figure 1 et sortent également de gauche à droite en direction d'une machine d'emballage 8.

Le buffer 2 permet le tamponnage ou stockage du flux de produits P provenant de la ligne de production. Ceci est favorable pour ne pas devoir arrêter la ligne de production lorsque la ligne d'emballage, par exemple la bande de transport 5, doit être arrêtée. A noter que le buffer 2 est de type first-in-first-out ce qui a des avantages certains dans le domaine alimentaire, où les produits ne doivent pas attendre trop longtemps avent d'être emballés.

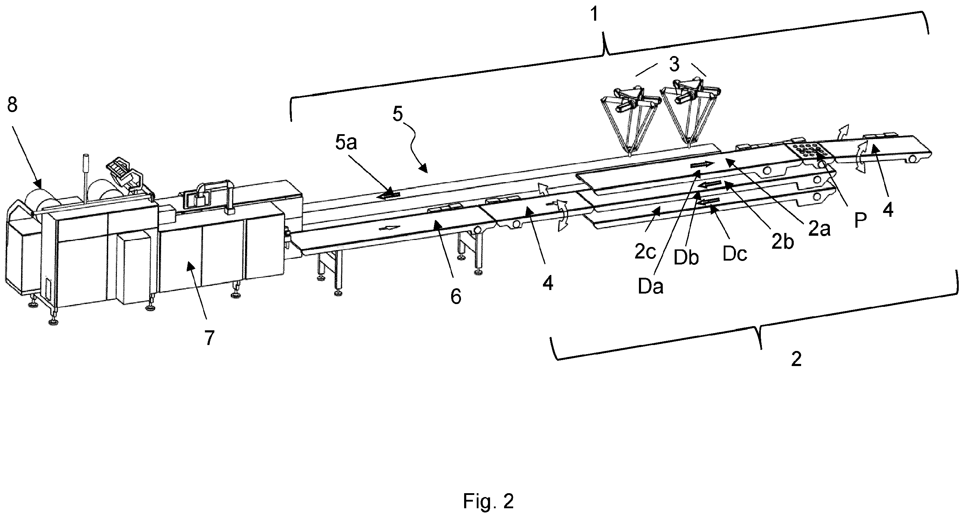

La Figure 2 présente une vue en perspective d'un dispositif 1 pour le positionnement de produits P dans une ligne de production selon un deuxième mode de réalisation. Le dispositif 1 de la Figure 2 est similaire à celui de la Figure 1 à part la direction de déplacement 5a de la bande de transport 5. Afin d'accommoder une direction 5a opposée à la direction du flux de produits provenant de l'installation de production 7, le buffer 2 doit être utilisé dans un mode de fonctionnement différent de celui expliqué en relation avec la Figure 1. Dans ce mode de réalisation, il est possible grâce aux aiguillages 4, de charger les produits P provenant d'une installation de production 7 par l'intermédiaire de la bande 6 sur la première bande de convoyage 2a. Lorsque les produits se trouvent sur la première bande de convoyage 2a, ils peuvent être saisis par l'intermédiaire des robots 3 et être placés dans un espace vide de la bande de transport 5 ou dans un espace vide d'un contenant, par exemple une boîte (non montrée ici), étant déplacé par la bande de transport 5. Les contenants remplis de produits P sont alors transportés par la bande de transport 5 dans la direction 5a vers un dispositif d'emballage 8. Les produits P qui n'ont pas été saisis par les robots 3 peuvent être alors transférés par l'aiguillage le plus distant de l'installation de production 7 vers la deuxième ou troisième bande de convoyage 2b-2c. Ces produits peuvent être ensuite transportés en direction de la première bande d'aiguillage pour être transférés à nouveau sur la première bande de convoyage 2a pour être saisis par les robots et finalement transférés sur la bande de transport 5.

Le buffer 2 de la Figure 2 est également configuré de telle sorte que les directions Da, Db et De peuvent être choisies indépendamment les unes des autres. Il est également possible d'ajuster la vitesse de déplacement de ces bandes individuellement.

Comme on peut le voir dans la Figure 2, la bande de transport 5 et la première bande de convoyage 2a se déplacent, dans ce mode de réalisation dans des directions opposées. Ceci permet d'utiliser le dispositif de ce second mode de réalisation également dans le mode dit de contre-flux. Ainsi, le premier robot dans la direction Da « voit » beaucoup de produits P qu'il peut alors placer dans les espaces libres restants des contenant qui se trouvent sur la bande de transport 5 et qui se déplacent dans la direction 5a. Les robots suivants dans la direction Da voient quant à eux moins de produits P mais des contenants vides. Dans ce mode de réalisation, le flux de produit est inversé. Les produits entrent de gauche à droite dans la Figure 2 et sortent de droite à gauche. Ceci permet d'avoir une ligne de production très compacte tout en pouvant utiliser le mode contre-flux au niveau des robots ce qui permet un remplissage des contenants efficace.

Le buffer 2 de la Figure 2 permet aussi le tamponnage du flux de produits P provenant de la ligne de production. Ceci est favorable pour ne pas devoir arrêter la ligne de production lorsque la ligne d'emballage, par exemple la bande de transport 5, doit être arrêtée. A noter que le buffer 2 est de type first-in-first-out ce qui a des avantages certains dans le domaine alimentaire, où les produits ne doivent pas attendre trop longtemps avent d'être emballés.

Il est important de noter que les modes de réalisations des Figures 1 et 2 peuvent être combinés. En effet, il est possible de prévoir deux bandes de transport 5 qui se déplacent dans des sens opposés. Les directions de déplacement des bandes de convoyage 2a-2c du buffer 2 peuvent alors être choisies pour le mode contre-flux au niveau des robots puissent être appliqués en relation avec les deux bandes de transport. En particulier, la direction Da de la première bande de convoyage est choisie pour être opposée à la direction de déplacement 5a de la bande de transport qui doit être fournie. Les directions Db et De sont alors adaptées à la direction Da pour que les bandes 2b et 2c fassent office de buffer.

Il est évident que la présente invention est sujette à de nombreuses variations quant à sa mise en oeuvre. Bien qu'un mode de réalisation non limitatif ait été décrit à titre d'exemple, on comprend bien qu'il n'est pas concevable d'identifier de manière exhaustive toutes les variations possibles. Il est bien sûr envisageable de remplacer un moyen décrit par un moyen équivalent sans sortir du cadre de la présente invention. Toutes ces modifications font partie des connaissances communes d'un homme du métier dans le domaine des lignes de productions automatisées.

## Revendications

1. Dispositif (1) pour le positionnement de produits (P) dans une ligne de production, en particulier pour le positionnement de produits depuis une bande de convoyage dans un contenant, comme par exemple une boîte, comprenant :
un buffer (2) comprenant au moins deux bandes de convoyage (2a,2b) pour le transport des produits (P) et deux aiguillages (4) permettant de transférer des deux côtés des bandes de convoyage (2a,2b) les produits (P) d'une des bandes de convoyage (2a, 2b) à l'autre bande de convoyage (2a,2b),
au moins un robot (3) configuré pour saisir au moins un produit (P) de la première bande de convoyage (2a) et pour le placer sur une bande de transport (5) ou dans un contenant placé sur la bande de transport (5),ladite bande de transport (5) étant placée essentiellement parallèlement et à proximité de la première bande de convoyage (2a) de telle façon que le robot (3) puisse positionner un produit de la première bande de convoyage (2a) sur la bande de transport (5),
**caractérisé en ce que** la première bande de convoyage (2a) et la bande de transport (5) sont configurées pour se déplacer en sens opposés.

2. Dispositif (1) la revendication 1 comprenant au moins deux robots.

3. Dispositif (1) selon l'une des revendications 1 à 2 comprenant des moyens de vision artificielle permettant au robot de reconnaître la forme et la position des produits.

4. Dispositif (1) selon la revendication 3 dans lequel les moyens de vision artificielle sont configurés pour permettre au robot de placer les produits dans un espace libre du contenant ou dans un espace libre de la bande de transport (5).

5. Dispositif (1) selon l'une des revendications précédentes dans lequel la première bande de convoyage (2a) et la bande de transport (5) sont configurées de telle sorte que leurs vitesses peuvent être adaptées de manière individuelle.

6. Dispositif (1) selon l'une des revendications précédentes dans lequel le sens de déplacement de la première bande de convoyage (2a), de la deuxième bande de convoyage (2b) et de la bande de transport (5) peut être inversé.

7. Dispositif (1) selon l'une des revendications précédentes dans lequel les aiguillages comprennent au moins une bande d'aiguillage (4) avec deux rouleaux de bande (4a,4b), caractérisé en ce la bande d'aiguillage est configurée pour que la hauteur d'au moins un des rouleaux de bande (4a,4b) soit ajustable à la hauteur de la première bande de convoyage (2a) et à la hauteur de la deuxième bande de convoyage (2b).

8. Dispositif (1) selon la revendication 7 **caractérisé en ce que** la bande d'aiguillage (4) est inclinable afin d'ajuster la hauteur du deuxième rouleau de bande (4b) à la hauteur de la première bande de convoyage (2a) et à la hauteur de la deuxième bande de convoyage (2b).

9. Dispositif (1) selon la revendication 7 **caractérisé en ce qu'**il comprend un mécanisme d'ascenseur configuré pour ajuster la hauteur des deux rouleaux de bande (4a,4b) à la hauteur de la première bande de convoyage (2a) et à la hauteur de la deuxième bande de convoyage (2b).

10. Dispositif (1) selon l'une des revendications 1 à 9 comprenant au moins trois bandes de convoyage (2a, 2b, 2c).

11. Dispositif (1) selon l'une des revendications précédentes dans lequel le robot est un robot delta ou un robot scara.

12. Utilisation d'un dispositif (1) selon l'une des revendications précédentes pour le placement d'un produit dans un contenant, l'utilisation prévoyant que le produit (P) placé sur la première bande de convoyage (2a) du buffer (2) est saisi par le robot (3) et placé dans un espace libre d'un contenant sur la bande de transport (5) ou dans un espace libre de la bande de transport (5), la première bande de convoyage (2a) et la bande de transport (5) se déplaçant en sens opposés.

13. Procédé pour l'emballage de produits (P) dans une ligne de production par l'intermédiaire d'un dispositif (1) selon l'une des revendications 1 à 11 comprenant les étapes suivantes :
a. Chargement de produits (P) sur la première bande d'aiguillage (5a) ;
b. Transfert des produits (P) sur la deuxième bande de convoyage (2b) du buffer (2) ;
c. Transport des produits (P) par la deuxième bande de convoyage (2b) en direction de la deuxième bande d'aiguillage (4) ;
d. Transfert des produits (P) de la deuxième bande de convoyage (2b) à la première bande de convoyage (2a) par l'intermédiaire de la deuxième bande d'aiguillage (4) ;
e. Transport des produits (P) par la première bande de convoyage (2a) en direction de la première bande d'aiguillage (4) ;
f. Saisie des produits (P) par un robot (3) ;
g. Placement par le robot (3) du produit saisi dans un espace libre d'un contenant sur la bande de transport (5) ou dans un espace libre de la bande de transport (5), où la bande de transport (5) se déplace en sens opposé à celui de la première bande de convoyage (2a).
h. Transport des produits (P) par la bande de transport (5) vers un dispositif d'emballage

14. Procédé pour l'emballage de produits (P) dans une ligne de production par l'intermédiaire d'un dispositif (1) selon l'une des revendications 1 à 11 comprenant les étapes suivantes :
a. Chargement de produits sur la première bande d'aiguillage ;
b. Transfert des produits sur la première bande de convoyage du buffer ;
c. Saisie d'un produits par un robot ;
d. Placement par le robot du produit saisi dans un espace libre d'un contenant sur la bande de transport ou dans un espace libre de la bande de transport, où la bande de transport se déplace en sens opposé à celui de la première bande de convoyage ;
e. Transfert des produits non saisis par le robot de la première bande de convoyage à la deuxième bande de convoyage par l'intermédiaire de la deuxième bande d'aiguillage
f. Transport des produits placés sur la bande de transport par la bande de transport vers un dispositif d'emballage
